# FASCICULE DE BREVET EUROPEEN

(11) **EP 1 115 318 B1**
(45) Date de publication et mention de la délivrance du brevet: **30.07.2003**
(21) Numéro de dépôt: 99946228.6
(22) Date de dépôt: 24.09.1999
(51) Int. Cl.: A47J 31/54

(54) **CHAUDIERE POUR APPAREIL ELECTROMENAGER COMPRENANT UN DISPOSITIF REDUISANT L'ENTARTRAGE**
HEISSWASSERBEREITER FÜR EIN HAUSHALTSGERÄT MIT EINER ENTKALKUNGSVORRICHTUNG
WATER FRONT FOR ELECTRICAL HOUSEHOLD APPLIANCE COMPRISING A DEVICE REDUCING SCALING

(30) Priorité: 25.09.1998 FR 9812184
(43) Date de publication de la demande: 18.07.2001
(73) Titulaire: SEB S.A., 69130 Ecully (FR)
(72) Inventeur: BERTRY, Didier, F-74150 Massingy (FR)
(74) Mandataire: Kiehl, Hubert
(86) Numéro de dépôt international: FR9902274
(87) Numéro de publication internationale: WO00018280

(56) Documents cités:
- DE-A- 3 133 593
- DE-A- 3 615 683

## Description

La présente invention se rapporte au domaine technique général des appareils électroménagers comprenant une chaudière prévue pour la production d'eau chaude.

La présente invention concerne plus particulièrement mais non exclusivement les appareils destinés à la préparation de boissons chaudes.

Les appareils électroménagers contenant de l'eau à chauffer utilisent généralement des pièces en matériau métallique, notamment pour transmettre la chaleur du moyen de chauffe à l'eau. Les chaudières généralement utilisées dans les cafetières présentent l'inconvénient de s'entartrer relativement rapidement. Le tartre forme une couche thermiquement isolante sur les parois de la chaudière qui affecte les échanges thermiques entre la chaudière et l'eau.

Un premier inconvénient réside dans le fait que l'eau est chauffée moins rapidement, ce qui dans une cafetière allonge le temps de préparation de la boisson.

Un deuxième inconvénient réside dans le fait que l'eau n'évacue pas suffisamment les calories apportées par la chaudière, ce qui a pour effet de faire monter la chaudière en température. Les moyens de régulation peuvent intervenir, ce qui limite les calories apportées par les moyens de chauffe et ralentit encore la chauffe de l'eau. Dans certains cas les moyens de régulation ne suffisent pas et l'intervention des moyens de protection thermique conduit à mettre hors service l'appareil.

Dans le cas d'une chaudière tubulaire, telle qu'utilisée généralement dans les cafetières électriques, la couche de tartre peut aller jusqu'à boucher le tube de la chaudière, la rendant totalement inutilisable.

Il est connu du document DE 31 33 593 de réaliser une cafetière électrique comportant une chaudière comprenant une chambre basse de chauffage de l'eau, reliée à un tube d'arrivée d'eau froide et à un tube d'évacuation d'eau chaude, lesquels débouchent dans la partie inférieure de la chambre. La chambre basse comporte une surface chauffante inférieure en légère déclivité en direction des tubes d'arrivée et d'évacuation d'eau, et est fermée par un couvercle. Des billes de verre, de porcelaine ou de tout autre matériau de diamètre peu inférieur à la hauteur de la chambre sont disposées dans ladite chambre. Les billes sont maintenues en constamment en mouvement irréguliers lors du fonctionnement de la chaudière, et évitent dans une certaine mesure le dépôt d'une couche de tartre sur la surface chauffante et le couvercle. Compte tenu des dimensions, les mouvements des billes sont uniquement des mouvements de roulement et de glissement. Des moyens tels que des nervures discontinues sont prévus pour éviter la remontée des billes dans l'un ou l'autre des tubes.

Des essais ont montré toutefois que du tartre finit par se déposer sur les billes et sur la plaque de chauffe. Ce dépôt n'est pas réparti uniformément sur toute la surface du fait du mouvement des billes. Les irrégularités du dépôt tendent à donner aux billes un axe de rotation préférentiel. Les dépôts autour des axes de rotation des billes finissent par se rejoindre. Le dispositif devient alors inopérant.

L'objet de la présente invention est de proposer une chaudière pour appareil électroménager dont le transfert thermique entre la surface chauffante et l'eau à chauffer soit affecté le moins possible par un dépôt de tartre.

Cet objet est atteint avec une chaudière de type bouilleur, comprenant une chambre d'ébullition associée à des moyens de chauffe, reliée à un conduit d'arrivée d'eau et à un conduit d'évacuation d'eau chaude, chaudière dans laquelle peuvent être disposées une ou plusieurs pièces libres susceptibles d'être mises en mouvement par l'eau chauffée, caractérisée en ce qu'une ou plusieurs pièce(s) libre(s) est/sont disposée(s) dans le conduit d'évacuation d'eau chaude.

Il a été constaté que cette disposition permettait de réduire de manière significative l'entartrage du conduit d'évacuation.

Avantageusement le rapport entre le diamètre du conduit d'évacuation et la section minimale des pièces est supérieur à 1,2, pour éviter le coincement des pièces et garantir leur liberté de mouvement dans le conduit.

Avantageusement la densité des pièces est comprise entre 1,5 et 8, et de préférence entre 2 et 4,5. Les pièces entraînées par le liquide frappent les parois du conduit avec une énergie cinétique significative sans pour autant s'avérer trop lourdes pour être suffisamment mises en mouvement.

Avantageusement le conduit d'évacuation forme dans la chambre d'ébullition un tube ascendant comportant une extrémité inférieure disposée à proximité du fond de la chambre d'ébullition et une ouverture à proximité du plafond de la chambre d'ébullition, le conduit d'arrivée d'eau étant relié à un réservoir d'eau et comportant un clapet anti-retour. Cette disposition permet d'obtenir une chaudière se réalimentant automatiquement au réservoir d'eau après l'expulsion de l'eau chauffée.

Avantageusement la chambre d'ébullition est formée par une coupelle métallique inférieure, à laquelle sont associés les moyens de chauffe, surmontée d'un couvercle en matière plastique comportant le conduit d'arrivée d'eau et le conduit d'évacuation. Une telle construction est particulièrement économique, car une partie relativement complexe peut être moulée d'un seul tenant.

Avantageusement le fond de la chambre d'ébullition comporte sous l'extrémité inférieure du conduit d'évacuation une zone dépourvue de moyens de chauffe ou de moyens de transmission de la chaleur. Cette disposition contribue également à limiter l'entartrage sous le conduit d'évacuation.

Avantageusement, l'extrémité inférieure du conduit d'évacuation est disposée dans une dépression formée dans le fond de la chambre d'ébullition. Cette disposition permet de limiter la production de vapeur en fin de cycle de vidange de la chambre d'ébullition, une telle production de vapeur étant propice à l'entartrage.

Selon un mode de réalisation, les moyens de chauffe sont formés par un élément chauffant plat. Cette disposition permet d'obtenir une chaudière particulièrement performante, et de plus de poids et d'encombrement réduit.

Selon un autre mode de réalisation, les moyens de chauffe sont formés par un élément chauffant blindé associé à une plaque de diffusion de chaleur fixée sous le fond de la chambre d'ébullition. Cette disposition permet d'obtenir une chaudière de construction économique.

La présente invention concerne également un appareil électroménager, notamment de type machine à boisson chaude, comportant un réservoir d'eau alimentant une chaudière du type précité reliée à un conduit d'évacuation de l'eau chauffée.

L'invention sera mieux comprise à l'étude de modes de réalisation pris à titre nullement limitatifs et illustrés dans les figures annexées, dans lesquelles :
- la figure 1 est une vue partielle en coupe verticale d'un exemple de réalisation.
- la figure 2 est une vue partielle en coupe verticale montrant un détail d'une variante de l'exemple montré à la figure 1.

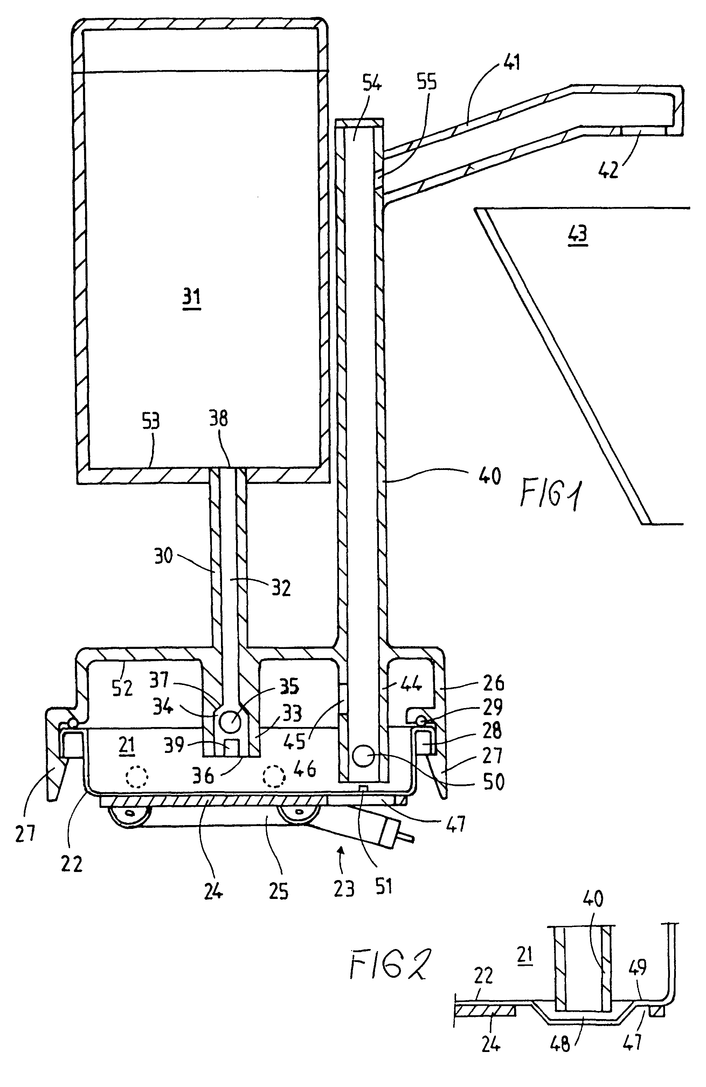

La figure 1 montre un exemple de réalisation d'une chaudière selon l'invention.

La chaudière comporte une chambre d'ébullition 21 formée par une coupelle métallique inférieure 22, réalisée par exemple en acier inoxydable, fermée par un couvercle 26, réalisé par exemple en matière plastique. Des moyens de chauffe 23 sont formés par un élément chauffant blindé 25 monté sous une plaque 24 de diffusion de chaleur fixée sous la coupelle 22. De préférence l'élément chauffant blindé 25 est solidarisé à la plaque 24 par brasage, la plaque 24 étant solidarisée également par brasage avec le fond de la coupelle 22. Le couvercle 26 comporte des pattes de clipsage 27 sur une collerette 28 de la coupelle 22. Un joint annulaire 29 est monté entre la coupelle 22 et le couvercle 26.

Un conduit 32 est ménagé entre le fond d'un réservoir d'eau 31 et la chambre d'ébullition 21. Le conduit 32 traverse le plafond 52 du couvercle 26 de la chambre d'ébullition 21. A l'extérieur de la chambre d'ébullition 21 le conduit 32 est formé par un tube 30 vertical issu du plafond du couvercle 26. A l'intérieur de la chambre d'ébullition 21 le conduit 32 est formé par un tube d'admission d'eau 33 issu du plafond du couvercle 26 et descendant vers le fond de la chambre d'ébullition 21. L'entrée 38 du conduit 32 est ménagée dans le fond du réservoir 31. L'extrémité supérieure du tube 30 débouche dans le fond 53 du réservoir 31. Un clapet anti-retour 34 est ménagé dans le tube 33. Le clapet 34 comporte un flotteur 35 susceptible de venir en appui contre un siège 37 pour obturer le conduit 32. La course du flotteur 35 est limitée vers le bas par une butée 39. Les tubes 30 et 33 peuvent être moulés avec la pièce formant le couvercle 26.

Le conduit d'évacuation de l'eau chauffée comporte un tube d'évacuation d'eau 40 s'élevant sensiblement verticalement dans la chambre d'ébullition 21 et se prolongeant hors de ladite chambre. Le tube 40 communique par un passage 55 avec une goulotte inclinée comportant une sortie 42 disposée au dessus d'un porte filtre 43. L'extrémité inférieure 46 du tube d'évacuation 40 est plus proche du fond de la chambre d'ébullition 21 que l'extrémité inférieure du tube d'admission 33. Une rainure verticale 45 est ménagée dans la paroi 44 du tube 40 disposée dans la chambre d'ébullition 21. Le tube 40 peut être moulé avec la pièce formant le couvercle 26.

Une pièce mobile 50 est disposée dans le tube d'évacuation 40. Tel que montré à la figure 2, la pièce mobile 50 est par exemple sensiblement sphérique, le tube 40 étant alors de section circulaire. D'autres géométries sont toutefois envisageables. Le rapport entre le diamètre intérieur du tube 40 et la section minimale de la pièce 50 est supérieur à 1,2. Par section minimale on entend par exemple le petit diamètre d'un ellipsoïde allongé. Pour l'exemple représenté à la figure 1, le rapport est d'environ 1,4. La densité de la pièce 50 est avantageusement comprise entre 1,5 et 8, et de préférence entre 2 et 4,5. La pièce 50 est par exemple réalisée en alumine. La pièce 50 est pleine mais peut à titre de variante être creuse. La pièce 50 peut aussi être revêtue.

Une butée 51 disposée sur le fond de la chambre d'ébullition est prévue pour éviter que la pièce mobile 50 ne s'échappe du tube 40 et/ou ne vienne heurter le fond chauffant. A titre de variante, la butée 51 peut être prévue dans le tube 40. Egalement à titre de variante, plusieurs pièces mobiles 50 peuvent être prévues dans le tube 40. Le tube 40 comporte en son extrémité supérieure un dégagement 54. La hauteur du dégagement 54 est suffisante pour laisser libre le passage 55 lorsque la pièce 50 atteint le dégagement 54. De préférence la pièce 50 ne peut pas traverser le passage 55.

Tel que montré à la figure 1, la plaque 24 comporte une épargne 47 sous le tube d'évacuation 40.

Lors du remplissage du réservoir 31 l'eau s'écoule par le conduit 32, l'air présent dans la chambre d'ébullition 21 étant chassé dans le tube d'évacuation 40 par la rainure 45. Le flotteur 34 soulevé par l'eau vient en appui sur le siège 37 pour fermer le conduit 32, le niveau de l'eau dépassant alors l'extrémité supérieure de la rainure 45.

Avec l'alimentation des moyens de chauffe 23 la température de l'eau présente dans la chambre d'ébullition s'élève. Après le début de l'ébullition, l'eau chauffée est expulsée par le tube d'évacuation 40 jusqu'à ce que la pression de vapeur dans la chambre d'ébullition 21 soit inférieure à la pression exercée par l'eau présente dans le réservoir 31. La pièce mobile 50 propulsée dans le tube 40 par l'eau chauffée frappe de manière aléatoire les parois du tube 40, évitant ainsi la formation d'une couche de tartre.

La hauteur de la colonne d'eau présente dans le conduit 32 permet de faciliter le remplissage de la chambre d'ébullition, en particulier lorsque le réservoir 31 est presque vide. A cet effet le clapet anti-retour 34 à flotteur 35 peut être éloigné du plafond du couvercle 26 de la chambre d'ébullition 21. Le dégagement de vapeur peut être réduit en limitant la hauteur de la rainure 45 à une valeur inférieure à 1/3 de la distance séparant l'extrémité supérieure de la rainure au fond de la chambre d'ébullition.

Avantageusement la section du conduit de remplissage est plus faible que la section du tube d'évacuation. Un rapport entre le diamètre intérieur du conduit de remplissage et le diamètre intérieur du tube d'évacuation compris entre 1,5 et 2,5 est préféré. Cette disposition permet de limiter la formation de vapeur par rapport à une construction dans laquelle le diamètre intérieur du conduit de remplissage et le diamètre intérieur du tube d'évacuation sont sensiblement voisins. Dans l'exemple représenté à la figure 1, le diamètre intérieur du conduit de remplissage 32 entre le fond 51 du réservoir 31 et le clapet anti retour 34 est environ deux fois plus faible que le diamètre intérieur du tube d'évacuation 40.

La figure 2 montre une variante de l'exemple de réalisation précédent dans laquelle l'extrémité inférieure du tube d'évacuation 40 est disposée dans une dépression 48 formée dans le fond de la coupelle 22. La dépression est obtenue par exemple par emboutissage de la coupelle 22. La plaque de diffusion de la chaleur 24 comporte également une épargne 47 au niveau de la dépression 48. De préférence, tel que montré à la figure 2, l'épargne 47 entoure largement la dépression 48, de manière à laisser une zone 49 du fond plane et dépourvue de plaque 24.

Ces dispositions permettent de faciliter le remplissage de la chambre d'ébullition 21 tout en limitant le dégagement de vapeur propice à l'entartrage.

De nombreuses améliorations peuvent être apportées à ces chaudières dans le cadre des revendications.

En particulier, les parois de la chaudière et notamment la face intérieure de la coupelle 14 peuvent subir un traitement améliorant la résistance à l'entartrage, tel qu'un polissage, ou encore être recouvertes d'un matériau sur lequel le tartre accroche difficilement, tel que l'or.

Il est également envisageable de combiner des dispositions appartenant à l'un ou l'autre des exemples de réalisation, telles qu'une ou des pièces mobiles dans la chambre d'ébullition et une ou des pièces mobiles dans le conduit d'évacuation de l'eau chauffée.

Le dispositif d'alimentation en eau de la chaudière, le conduit d'évacuation de l'eau chauffée et le dispositif d'évacuation de l'air formé par l'ouverture 7 ou la rainure 45 peuvent être modifiés sans sortir du cadre de l'invention, une ou plusieurs pièces mobiles étant disposées dans la chambre d'ébullition et/ou dans le conduit d'évacuation de l'eau chauffée.

## Revendications

1. Chaudière de type bouilleur, comprenant une chambre d'ébullition (21) associée à des moyens de chauffe (23), reliée à un conduit d'arrivée d'eau (32) et à un conduit d'évacuation d'eau chaude (40), chambre dans laquelle peuvent être disposées une ou plusieurs pièces libres susceptibles d'être mises en mouvement par l'eau chauffée, **caractérisée en ce qu'**une ou plusieurs pièce(s) libre(s) (50) est/sont disposée(s) dans le conduit d'évacuation (40).

2. Chaudière selon la revendication 1, **caractérisée en ce que** le rapport entre le diamètre du conduit d'évacuation (40) et la section minimale des pièces (50) est supérieur à 1,2.

3. Chaudière selon l'une des revendications 1 ou 2, **caractérisée en ce que** la densité des pièces (50) est comprise entre 1,5 et 8, et de préférence entre 2 et 4,5.

4. Chaudière selon l'une des revendications 1 à 3, **caractérisée en ce que** le conduit d'évacuation (40) forme dans la chambre d'ébullition (21) un tube ascendant (44) comportant une extrémité inférieure disposée à proximité du fond de la chambre d'ébullition (21) et une ouverture (45) à proximité du plafond de la chambre d'ébullition (21), et **en ce que** le conduit d'arrivée d'eau (32) est relié à un réservoir d'eau (31) et comporte un clapet anti-retour (34).

5. Chaudière selon l'une des revendications 1 à 4, **caractérisée en ce que** le fond de la chambre d'ébullition (21) comporte sous l'extrémité inférieure du conduit d'évacuation (40) une zone dépourvue de moyens de chauffe ou de moyens de transmission de la chaleur (24).

6. Chaudière selon l'une des revendications 1 à 5, **caractérisée en ce que** l'extrémité inférieure du conduit d'évacuation (40) est disposée dans une dépression (48) formée dans le fond de la chambre d'ébullition (21).

7. Chaudière selon l'une des revendications 1 à 6, **caractérisée en ce que** les moyens de chauffe (2) sont formés par un élément chauffant plat.

8. Chaudière selon l'une des revendications 1 à 7, **caractérisée en ce que** les moyens de chauffe (25) sont formés par un élément chauffant blindé associé à une plaque de diffusion de chaleur (24) fixée sous le fond de la chambre d'ébullition (21).

9. Appareil électroménager, comportant un réservoir d'eau alimentant une chaudière reliée à un conduit d'évacuation de l'eau chauffée, **caractérisé en ce qu'**il comporte une chaudière selon l'une des revendications 1 à 8.

10. Appareil électroménager, selon la revendication 9, **caractérisé en ce qu'**il s'agit d'une machine à boisson chaude.

## Patentansprüche

1. Wasserkessel vom Typ Siedekessel, mit einer Siedekammer (21), die Heizmitteln (23) zugeordnet ist, mit einer Wasserzuführungsleitung (32) und einer Warmwasserabführungsleitung (40) verbunden ist, wobei in der Kammer ein oder mehrere freie Teile angeordnet sein können, die durch das erwärmte Wasser in Bewegung versetzt werden können, **dadurch gekennzeichnet, daß** eines oder mehrere freie Teile (50) in der Abführungsleitung (40) angeordnet ist/sind.

2. Wasserkessel nach Anspruch 1, **dadurch gekennzeichnet, daß** das Verhältnis zwischen dem Durchmesser der Abführungsleitung (40) und dem minimalen Querschnitt der Teile (50) größer als 1,2 ist.

3. Wasserkessel nach einem der Ansprüche 1 oder 2, **dadurch gekennzeichnet, daß** die Dichte der Teile (50) zwischen 1,5 und 8 und bevorzugt zwischen 2 und 4,5 liegt.

4. Wasserkessel nach einem der Ansprüche 1 bis 3, **dadurch gekennzeichnet, daß** die Abführungsleitung (40) in der Siedekammer (21) ein Steigrohr (44) bildet, das ein unteres Ende, das in der Nähe des Bodens der Siedekammer (21) angeordnet ist, und eine Öffnung (45) in der Nähe der Decke der Siedekammer (21) aufweist, und daß die Wasserzuführungsleitung (32) mit einem Wassertank (31) verbunden ist und ein Rückschlagventil (34) aufweist.

5. Wasserkessel nach einem der Ansprüche 1 bis 4, **dadurch gekennzeichnet, daß** der Boden der Siedekammer (21) unter dem unteren Ende der Abführungsleitung (40) eine Zone ohne Heizmittel oder Wärmeübertragungsmittel (24) aufweist.

6. Wasserkessel nach einem der Ansprüche 1 bis 5, **dadurch gekennzeichnet, daß** das untere Ende der Abführungsleitung (40) in einer Vertiefung (48) angeordnet ist, die in dem Boden der Siedekammer (21) gebildet ist.

7. Wasserkessel nach einem der Ansprüche 1 bis 6, **dadurch gekennzeichnet, daß** die Heizmittel (2) durch ein flaches Heizelement gebildet sind.

8. Wasserkessel nach einem der Ansprüche 1 bis 7, **dadurch gekennzeichnet, daß** die Heizmittel (25) durch eine gekapseltes Heizelement gebildet sind, das einer Wärmediffusionsplatte (24) zugeordnet ist, die unter dem Boden der Siedekammer (21) befestigt ist.

9. Elektrohaushaltsgerät mit einem Wassertank, der einen Wasserkessel versorgt, der mit einer Warmwasserabführungsleitung verbunden ist, **dadurch gekennzeichnet, daß** es einen Wasserkessel nach einem der Ansprüche 1 bis 8 aufweist.

10. Elektrohaushaltsgerät nach Anspruch 9, **dadurch gekennzeichnet, daß** es sich um eine Heißgetränkmaschine handelt.

## Claims

1. A boiler of the type for delivering boiling hot water, comprising a boiling chamber (21) associated with heater means (23) connected to a water inlet duct (32) and to a hot water delivery duct (40), which chamber may receive one or more loose pieces that are suitable for being set into movement by the water being heated, the boiler being **characterized in that** one or more loose pieces (50) is/are placed in the delivery duct (40).

2. A boiler according to claim 1, **characterized in that** the ratio between the diameter of the delivery duct (40) and the minimum section of the pieces (50) is greater than 1.2.

3. A boiler according to claim 1 or claim 2, **characterized in that** the relative density of the pieces (50) lies in the range 1.5 to 8, and preferably in the range 2 to 4.5.

4. A boiler according to any one of claims 1 to 3, **characterized in that** the delivery duct (40) forms a rising tube (44) inside the boiling chamber (21), said tube having a bottom end disposed close to the bottom of the boiling chamber (21) and an opening (45) close to the ceiling of the boiling chamber (21), and **in that** the water inlet duct (32) is connected to a water reservoir (31) and includes a non-return valve (34).

5. A boiler according to any one of claims 1 to 4, **characterized in that** the bottom of the boiling chamber (21) includes, beneath the bottom end of the delivery duct (40), a zone that does not include heater means or heat transmission means (24).

6. A boiler according to any one of claims 1 to 5, **characterized in that** the bottom end of the delivery duct (40) is disposed in a depression (48) formed in the bottom of the boiling chamber (21).

7. A boiler according to any one of claims 1 to 6, **characterized in that** the heater means (2) are formed by a flat heater element.

8. A boiler according to any one of claims 1 to 7, **characterized in that** the heater means (25) are formed by a metal-clad heater element associated with a heat diffusing plate (24) fixed beneath the bottom of the boiling chamber (21).

9. A household electric appliance comprising a water reservoir feeding a boiler connected to a hot water delivery duct, **characterized in that** it includes a boiler according to any one of claims 1 to 8.

10. A household electric appliance according to claim 9, **characterized in that** it constitutes a hot beverage machine.
